(19) Europäisches Patentamt
European Patent Office
Office européen des brevets

(11) **EP 2 549 289 A2**

(12) **EUROPÄISCHE PATENTANMELDUNG**

(43) Veröffentlichungstag:
**23.01.2013 Patentblatt 2013/04**

(51) Int Cl.:
***G01S 7/40*** *(2006.01)*

(21) Anmeldenummer: **12168840.2**

(22) Anmeldetag: **22.05.2012**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **21.07.2011 DE 102011079522**

(71) Anmelder: **ROBERT BOSCH GMBH**
**70442 Stuttgart (DE)**

(72) Erfinder:
• **Kuehnle, Goetz**
**71282 Hemmingen (DE)**
• **Bechler, Dirk**
**76135 Karlsruhe (DE)**
• **Chabaud, Maija**
**71732 Tamm (DE)**

(54) **Erkennung einer Dejustage eines Radarsensors eines Fahrzeugs**

(57) Verfahren zur Erkennung einer Dejustage eines Radarsensors (10) eines Fahrzeugs in Elevationsrichtung, bei dem das Vorhandensein einer Dejustage in Elevationsrichtung erkannt wird auf der Basis einer von der Winkelausrichtung des Radarsensors (10) in Elevationsrichtung abhängigen Charakteristik eines von dem Radarsensor (10) empfangenen Bodenclutter-Signals. Beispielsweise wird ein Zahlenwert eines Dejustagewinkels ($\Delta\alpha$) in Elevationsrichtung bestimmt auf der Basis einer von der Winkelausrichtung des Radarsensors (10) in Elevationsrichtung abhängigen Charakteristik eines von dem Radarsensor (10) empfangenen Bodenclutter-Signals.

Fig. 1

EP 2 549 289 A2

**Beschreibung**

STAND DER TECHNIK

Die Erfindung betrifft ein Verfahren zur Erkennung einer Dejustage eines Radarsensors eines Fahrzeugs in Elevationsrichtung. Weiter betrifft die Erfindung ein Verfahren zur Bestimmung eines Dejustagewinkels eines Radarsensors eines Fahrzeugs in Elevationsrichtung.

Radarsensoren werden in Kraftfahrzeugen zunehmend zur Erfassung des Verkehrsumfelds eingesetzt, beispielsweise im Rahmen eines sogenannten ACC-Systems (Adaptive Cruise Control), mit dem eine automatische Abstandsregelung durchgeführt werden kann. Eine horizontale Winkelerfassung von detektierten Radarobjekten erfolgt basierend auf einem horizontalen Antennendiagramm. Beispielsweise wird ein horizontales Antennendiagramm verwendet, das einem festgelegten Elevationswinkel entspricht, wie z.B. 0°. Wenn der Radarsensor in Elevationsrichtung dejustiert ist, kann das tatsächlich verwendete Antennendiagramm von dem angenommenen Antennendiagramm abweichen und eine auf dem Antennendiagramm basierende Auswertung der Messungen beinträchtigen.

DE 199 37 723 C2 beschreibt ein Verfahren zur Bestimmung einer vertikalen Dejustage eines Radarsensors, bei dem von einem Radarziel reflektierte Empfangsstrahlen mit einer Vielzahl von Antennendiagrammen, die unterschiedlichen Höhenwinkel-Dejustagen zugeordnet sind, verglichen werden und aus ermittelten Vergleichswerten ein Höhenwinkel sowie ein Fehlerwinkel für den Höhenwinkel bestimmt wird.

DE 10 2008 054 579 A1 beschreibt ein Verfahren zum Erfassen einer vertikalen Dejustage eines Radarsensors, bei dem die vertikale Dejustage auf der Basis einer Güte bestimmt wird, mit welcher ein von einem Radarziel reflektiertes Signal zu einem auf einen justierten Radarsensor hinweisenden Sensorprofil passt.

Die bekannten Verfahren basieren auf der Auswertung der Reflektionen von einem Radarobjekt und setzen idealisierte Objekteigenschaften voraus.

OFFENBARUNG DER ERFINDUNG

Aufgabe der Erfindung ist es, die zuverlässige und automatische Erkennung einer Dejustage eines in Elevationsrichtung dejustierten Radarsensors zu ermöglichen. Gemäß einer weiteren Aufgabe soll dabei nicht nur erkannt werden, ob der Radarsensor dejustiert ist, sondern es soll auch zumindest ein Betrag des Zahlenwertes des Dejustagewinkels zuverlässig und automatisch bestimmt werden.

Erfindungsgemäß wird die erste Aufgabe bei einem Verfahren der eingangs genannten Art dadurch gelöst, dass das Vorhandensein einer Dejustage in Elevationsrichtung erkannt wird auf der Basis einer von der Winkelausrichtung des Radarsensors in Elevationsrichtung abhängigen Charakteristik eines von dem Radarsensor empfangenen Bodenclutter-Signals.

Die Erfindung macht es sich zunutze, dass das empfangene Bodenclutter-Signal stark von der vertikalen Winkelausrichtung des Radarsensors abhängt.

Indem das Vorliegen einer Dejustage basierend auf dem Bodenclutter-Signal erkannt wird, ist das Verfahren von Objekteigenschaften zufällig detektierter Radarziele unabhängig.

Gemäßeiner Weiterbildung der Erfindung umfasst das Verfahren die Bestimmung eines Dejustagewinkels des Radarsensors des Fahrzeugs in Elevationsrichtung, wobei ein Zahlenwert des Dejustagewinkels bestimmt wird auf der Basis einer von der Winkelausrichtung des Radarsensors in Elevationsrichtung abhängigen Charakteristik des von dem Radarsensor empfangenen Bodenclutter-Signals. Somit wird ein Verfahren zur Bestimmung eines Dejustagewinkels eines Radarsensors eines Fahrzeugs in Elevationsrichtung offenbart, bei dem ein Zahlenwert des Dejustagewinkels bestimmt wird auf der Basis einer von der Winkelausrichtung des Radarsensors in Elevationsrichtung abhängigen Charakteristik eines von dem Radarsensor empfangenen Bodenclutter-Signals. Der Begriff Zahlenwert kann dabei sowohl einen vorzeichenbehafteten Zahlenwert als auch einen Zahlenwert eines Absolutbetrags umfassen. Beispielsweise kann die Erkennung einer Dejustage des Radarsensors des Fahrzeugs in Elevationsrichtung erfolgen durch Bestimmen des Dejustagewinkels. Beispielsweise kann anhand eines einen Schwellwert überschreitenden Dejustagewinkels das Vorliegen einer Dejustage erkannt werden.

Da das empfangene Bodenclutter-Signal stark von der vertikalen Winkelausrichtung des Radarsensors abhängt und der Zahlenwert des Dejustagewinkels basierend auf dem Bodenclutter-Signal bestimmt wird, ist das Verfahren von Objekteigenschaften zufällig detektierter Radarziele unabhängig. Das Verfahren ermöglicht eine automatische, zuverlässige und kostengünstige Erkennung eines vertikal dejustierten Radarsensors, wobei nicht nur erkannt wird, ob der Radarsensor dejustiert ist, sondern auch ein Zahlenwert des Dejustagewinkels bestimmt wird, so dass eine entsprechende Korrektur erfolgen kann.

Gegenstand der Erfindung ist außerdem ein Radarsensor, der zur Durchführung des erfindungsgemäßen Verfahrens ausgebildet ist.

Vorteilhafte Ausgestaltungen und Weiterbildungen der Erfindung sind in den Unteransprüchen angegeben.

In einer vorteilhaften Ausführungsform ist der Radarsensor ein FMCW-Radar, und als Charakteristik wird eine Charakteristik des Frequenzspektrums des von dem Radarsensor empfangenen Bodenclutter-Signals ausgewertet, insbesondere die Frequenzlage des Maximums im Spektrum des Bodenclutter-Signals für mindestens eine Modulationsrampe. Die Lage des Maximums lässt sich für eine gegebene Eigengeschwindigkeit des Fahrzeugs basierend auf der Einbauhöhe des Radarsensors und einem vertikalen Antennendiagramm des Radarsensors für unterschiedliche Winkelausrichtungen in Elevationsrichtung berechnen. Erwartete Lagen des Maximums können beispielsweise für unterschiedliche Winkelausrichtungen und unterschiedliche Eigengeschwindigkeitswerte in Tabellen abgelegt werden und zum Vergleich mit der Lage des Maximums des gemessenen Bodenclutter-Signals zur Bestimmung des Dejustagewinkels herangezogen werden.

In einer anderen Ausführungsform wird die Charakteristik durch die Form des Frequenzspektrums des Bodenclutter-Signals insgesamt gebildet. Für eine gegebene Eigengeschwindigkeit des Fahrzeugs lässt sich basierend auf der Einbauhöhe des Radarsensors und einem vertikalen Antennendiagramm des Radarsensors das erwartete Spektrum des Bodenclutter-Signals für unterschiedliche Winkelausrichtungen des Radarsensors in Elevationsrichtung berechnen. Durch Vergleich mit dem tatsächlich vom Radarsensor aufgenommenen Spektrum kann dann der vorliegende Dejustagewinkel bestimmt werden.

KURZE BESCHREIBUNG DER ZEICHNUNGEN

Im folgenden werden Ausführungsbeispiele der Erfindung anhand der Zeichnung näher erläutert.

Es zeigen:

Fig. 1    ein Blockdiagramm eines Radarsensors, der zur Durchführung des erfindungsgemäßen Verfahrens ausgebildet ist;

Fig. 2    ein Diagramm zur Illustration der geometrischen Verhältnisse beim Empfang von Bodenclutter;

Fig. 3    eine schematische Darstellung eines vertikalen Antennendiagramms des Radarsensors;

Fig. 4    eine schematische Darstellung einer erwarteten Empfangsleistung bei einer Freifahrt;

Fig. 5    ein schematisches Diagramm zur Illustration der bei dem Verfahren verwendeten Charakteristik eines erwarteten Bodenclutter-Signals;

Fig. 6    ein schematisches Diagramm zur Illustration der Charakteristik eines gemessenen Bodenclutter-Signals; und

Fig.7    ein Blockdiagramm eines weiteren Beispiels eines Radarsensors.

BESCHREIBUNG VON AUSFÜHRUNGSBEISPIELEN

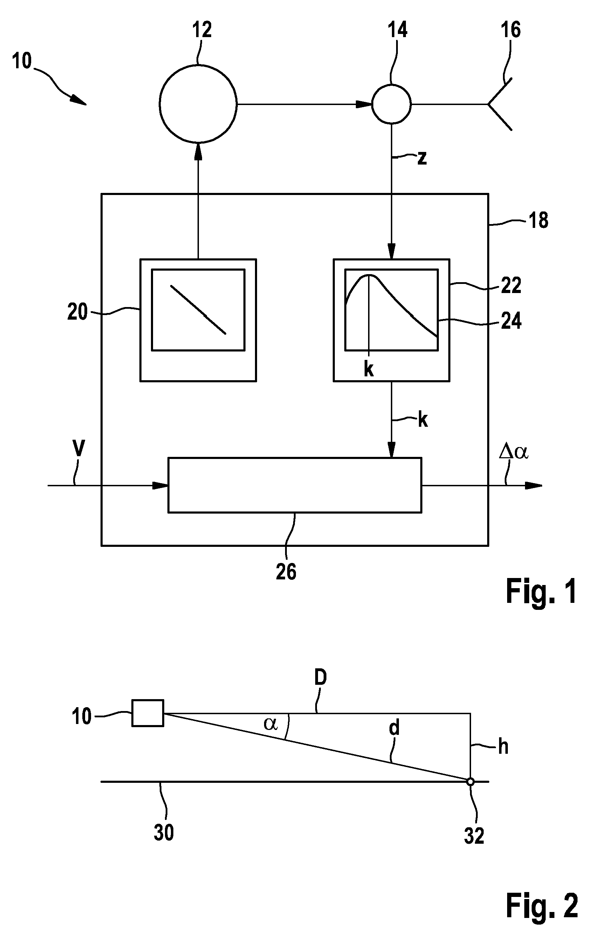

Fig. 1 zeigt als wesentliche Komponente eines Radarsensors 10 für ein Kraftfahrzeug einen Oszillator 12, einen Mischer 14, eine Antenne 16 und ein Steuergerät 18. Der Radarsensor 10 ist als FMCW-Radar ausgebildet. Das Steuergerät 18 ist in an sich bekannter Weise zur Ansteuerung des Oszillators 12 und Auswertung des von der Antenne 16 empfangenen Radarsignals und Bestimmung von Ortungsdaten eines erfassten Radarobjektes, insbesondere eines Abstandes und einer Relativgeschwindigkeit, ausgebildet. Im folgenden werden weitere für die Erfindung wesentliche Komponenten des Radarsensors 10 näher beschrieben.

Das Steuergerät 18 enthält ein Frequenzmodul 20, das den Oszillator 12 so ansteuert, dass die Frequenz des von dem Radarsensor 10 erzeugten Radarsignals mit wenigstens einer Rampe, insbesondere einer fallenden Rampe, moduliert wird. Das vom Oszillator 12 erzeugte Radarsignal wird über den Mischer 14 an die Antenne 16 weitergeleitet und von der Antenne in die Umgebung vor dem Fahrzeug emittiert. Das an etwaigen Objekten in der Umgebung und an der Fahrbahnoberfläche reflektierte Radarecho wird von der Antenne 16 empfangen und im Mischer 14 mit einem Teil des vom Oszillator 12 gelieferten Signals gemischt. Dadurch wird ein Zwischenfrequenzsignal z erhalten, das für jedes reflektierende Objekt oder jeden reflektierenden Abschnitt der Fahrbahnoberfläche eine Frequenzkomponente enthält, deren Frequenz einerseits von der Laufzeit der Radarwellen und damit vom Abstand zu dem Objekt und andererseits aufgrund des Doppler-Effektes von der Relativgeschwindigkeit des Objektes abhängig ist. Das Zwischenfrequenzsignal z wird in einem Verarbeitungsmodul 22 digitalisiert und durch diskrete Fourier-Transformation in ein der Rampe zugeordnetes Spektrum 24 zerlegt.

Wenn sich stark reflektierende Objekte im Ortungsbereich des Radarsensors 10 befinden, so enthält das Spektrum 24 für jedes dieser Objekte einen markanten Peak, dessen Frequenzlage durch den Abstand und die Relativgeschwindigkeit des betreffenden Objekts bestimmt ist. Anhand der Frequenzen der zu demselben Objekt gehörenden Peaks in Spektren, die unterschiedlichen Rampen zugeordnet sind, lassen sich dann der Abstand und die Relativgeschwindigkeit dieses Objektes bestimmen. Die entsprechenden Auswertungsprozeduren sind dem Fachmann bekannt und sollen hier nicht näher beschrieben werden.

Wenn sich keine markanten Objekte im Ortungsbereich befinden, etwa bei einer sogenannten Freifahrt ohne Abstandsregelung, wird die Form des Spektrums 24 durch den sogenannten Bodenclutter bestimmt, d.h., durch Reflektionen an Bodenunebenheiten auf der Fahrbahnoberfläche. Das Verarbeitungsmodul 22 bestimmt die Frequenzlage k des Maximums des Bodenclutter-Signals im Spektrum 24. Falls das Spektrum neben dem Bodenclutter auch Objektpeaks enthält, können diese zuvor mit bekannten Prozeduren ausgefiltert werden.

Wie im folgenden noch näher erläutert werden soll, bildet die Frequenzlage k des Maximums des Bodenclutter-Signals eine Charakteristik des Signals, die von der Winkelausrichtung des Radarsensors 10 in Elevationsrichtung abhängig ist und somit eine Bestimmung eines Dejustagewinkels des Radarsensors in Elevationsrichtung ermöglicht. Das Steuergerät 18 weist ein Vergleichsmodul 26 auf, das die Frequenzlage k mit für unterschiedliche Winkelausrichtungen des Radarsensors 10 erwarteten Frequenzlagen vergleicht und anhand des Vergleichsergebnisses einen Zahlenwert des Dejustagewinkels $\Delta\alpha$ in Elevationsrichtung bestimmt und ausgibt. Das Vergleichsmodul 26 erhält dazu als Eingabe ein Signal, das die Eigengeschwindigkeit V des Fahrzeugs angibt. Das Verarbeitungsmodul 22 und das Vergleichsmodul 26 bilden eine Auswerteeinrichtung für das Bodenclutter-Signal.

Fig. 2 zeigt den Radarsensor 10, der in einer bestimmten Einbauhöhe h oberhalb der Fahrbahnoberfläche 30 in das Fahrzeug eingebaut ist und ein Bodenclutter-Signal von einem bestimmten Punkt 32 auf der Fahrbahnoberfläche empfängt. Horizontal und in Fahrtrichtung des Fahrzeugs gemessen hat der Punkt 32 zum Radarsensor 10 den Abstand D. Der radiale, längs der Sichtlinie gemessene Abstand des Punktes 32 vom Radarsensor 10 ist mit d bezeichnet. Der Elevationswinkel des Punktes 32 vom Radarsensor 10 aus gesehen ist mit $\alpha$ bezeichnet. Es gilt folglich:

$$h = d * \sin \alpha.$$

Der Radarsensor empfängt Bodenclutter nicht nur von dem einen Punkt 32, sondern von einer Vielzahl von Punkten, die in Fahrtrichtung auf der Fahrbahnoberfläche 30 verteilt sind, wie im folgenden näher erläutert werden soll.

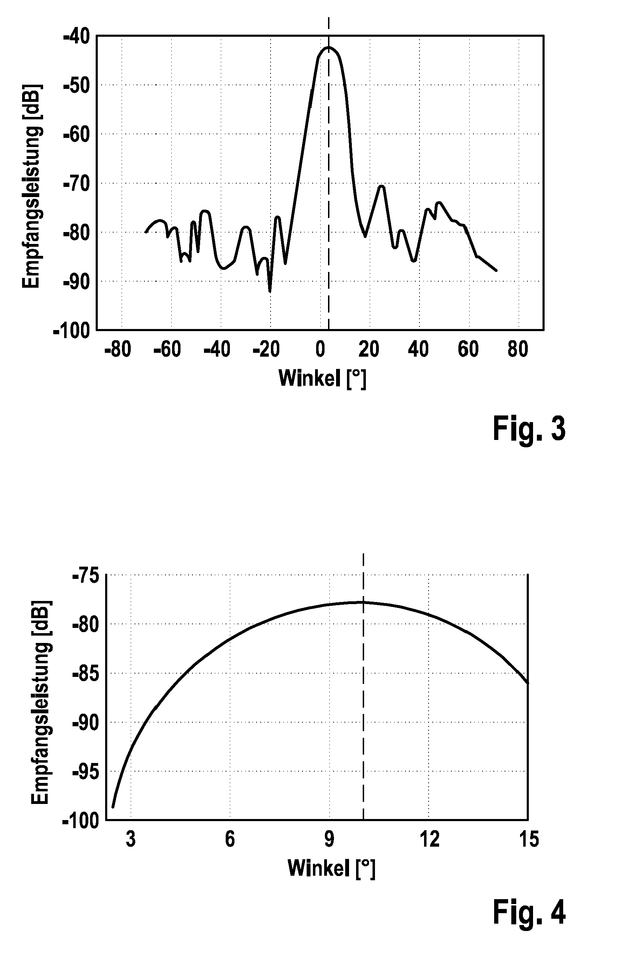

Fig. 3 zeigt schematisch ein vertikales Antennendiagramm der Antenne 16, welches einem Azimutwinkel von 0° entspricht. Dargestellt ist die Empfangsleistung in dB über dem Elevationswinkel. Die Empfindlichkeit der Antenne hat ein Maximum bei 3°, d.h., die Antenne 16 weist einen sogenannten Schielwinkel von 3° nach unten auf die Fahrbahn auf. Das Antennendiagramm kann in an sich bekannter Weise mit einem Standard-Radarobjekt im Fernfeld gemessen werden. Die Frequenzlage des Maximums bei 3' ist in Fig. 3 gekennzeichnet.

Fig. 4 zeigt schematisch den erwarteten Verlauf der Empfangsleistung eines Bodenclutter-Signals in Abhängigkeit von dem Empfangswinkel in Elevationsrichtung für einen perfekt justierten Sensor. Das heßt, der Winkel des Antennendiagramms in Fig. 3 entspricht dem Elevationswinkel bezüglich der Horizontalen. Dargestellt ist die Empfangsleistung in dBüber dem Winkel. Der erwartete Verlauf ergibt sich aus dem Antennendiagramm in Fig. 3 unter Berücksichtigung der Einbauhöhe h des Radarsensors 10 und einer abstandsabhängigen Dämpfung des reflektierten Radarsignals. Insbesondere ergibt sich aus der in Fig. 2 dargestellten Geometrie für jeden Winkel ein radialer Abstand d, mit dem die unter dem betreffenden Winkel reflektierten Radarwellen gedämpft werden. Die Dämpfung ist proportional zur vierten Potenz von d.

Im gezeigten Beispiel wird das Maximum der Emfpangsleistung unter einem Winkel $\alpha$ = 10° empfangen. Der Winkel $\alpha$ soll im folgenden den Winkel angeben, bei dem die Empfangsleistung des Bodenclutters maximal ist.

Der Punkt 32, von dem das Maximum des Bodenclutter-Signals empfangen wird, entspricht für eine gegebene Modulationsrampe und eine gegebene Eigengeschwindigkeit V des Fahrzeugs einer Frequenzlage des Maximums der Empfangsleistung im Frequenzspektrum des Bodenclutter-Signals. Der Zusammenhang zwischen dem Winkel und der Frequenzlage k soll im folgenden näher erläutert werden. Für die anzustellenden Überlegungen kann vereinfachend der Bodenclutter als ein "normales" Objekt betrachtet werden, dessen Abstand und Relativgeschwindigkeit durch die Frequenzlage k des Maximums im Bodenclutter-Spektrum gegeben ist. Für die Auswertung der in Fig. 4 gekennzeichneten Lage des Maximums kann vereinfachend angenommen werden, dass der Rückstreuquerschnitt der Fahrbahnoberfläche 30 vom Winkel unabhängig ist.

Wenn V die Eigengeschwindigkeit des Fahrzeugs ist, so gilt für die Relativgeschwindigkeit v des Punktes 32 relativ zum Radarsensor 10 (längs der Sichtlinie gemessen):

$$v = - V * \cos \alpha.$$

Das Minuszeichen rührt daher, dass die Relativgeschwindigkeit bei zunehmendem Objektabstand positiv gezählt wird, während der Abstand d bei positiver Eigengeschwindigkeit V des Fahrzeugs abnimmt.

Für die Frequenzlage k des Maximums im Bodenclutter gilt bei einem FMCW-Radar wie für jedes Objekt die Formel:

$$k = (2/c)(d * F + v * f * T)$$

$$= (2/c) * F * h / \sin \alpha - (2/c) * f * T * V * \cos \alpha \qquad (1)$$

Darin ist:

F    der Frequenzhub der Modulationsrampe

f    die Mittenfrequenz der betreffenden Modulationsrampe

T    die Dauer der Modulationsrampe

c    die Lichtgeschwindigkeit.

Die Frequenzlage k ist hier eine dimensionslose Große, die das sogenannte Frequenzbin angibt, in dem das Maximum des Bodenclutter-Spektrums liegt. Wenn der Mischer 14 ein IQ-Mischer ist, der die komplexe Amplitude des Zwischenfrequenzsignals liefert, so kann zwischen positiven und negativen Frequenzen unterschieden werden, und das Spektrum hat demgemäßeinen positiven und einen negativen Teil. Wenn jedoch der Mischer 14 nur ein reelles Zwischenfrequenzsignal liefert, so tritt im Spektrum als unabhängige Variable nur der Betrag |k| der Frequenzlage auf.

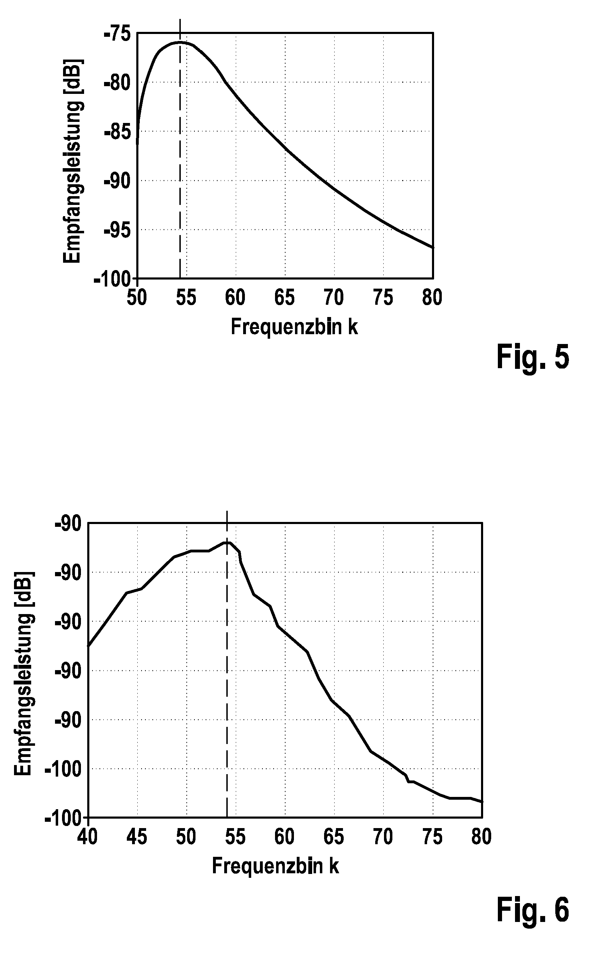

Fig. 5 zeigt schematisch für einen typischen Fall die erwartete Empfangsleistung eines Bodenclutter-Signals für einen perfekt justierten Radarsensor 10 (Dejustagewinkel $\Delta\alpha$ = 0°) mit dem Antennendiagramm nach Fig. 3. Für das dargestellte Beispiel gelten die folgenden Parameter:

$$F = - 600 \text{ MHz}$$

$$T = 5 \text{ ms}$$

$$f = 76{,}5 \text{ GHz}$$

$$h = 0{,}35 \text{ m}$$

$$V = 65{,}7 \text{ km/h}$$

Aus der Frequenzlage des Maximums der Empfangsleistung bei dem Frequenzbin 53,9 kann gemäßGleichung (1) der zugehörige Winkel $\alpha$ bestimmt werden als $\alpha$ = 10°.

In entsprechender Weise können für verschiedene Dejustagewinkel $\Delta\alpha$, die durch entsprechende Verschiebung des Antennendiagramms berücksichtigt werden können, und für verschiedene Eigengeschwindigkeiten des Fahrzeugs zugeförige erwartete Frequenzlagen k des Maximums des Bodenclutter-Signals berechnet werden. Die Werte der erwarteten Frequenzlagen sind beispielsweise in Form von Tabellen in der Vergleichseinheit 26 abgelegt.

Fig. 6 zeigt beispielhaft ein tatsächlich im Experiment gemessenes Frequenzspektrum eines Bodenclutter-Signals. Das von dem Verarbeitungsmodul 22 berechnete Frequenzspektrum 24 hat ein Maximum im Frequenzbin k = 54. Durch Vergleich mit den im Vergleichsmodul 26 abgelegten, erwarteten Frequenzlagen für die gegebene Eigengeschwindigkeit V wird ein Dejustagewinkel $\Delta\alpha$ bestimmt. In diesem Fall wird aufgrund des Grades der Übereinstimmung mit der erwarteten Frequenzlage der Fig. 5 ein Dejustagewinkel $\Delta\alpha$ = 0° bestimmt. Für die jeweiligen Vergleiche kann die Abweichung der Frequenzlage von der jeweiligen erwarteten Frequenzlage bestimmt werden, wobei als Dejustagewinkel derjenige bestimmt wird, dessen zugeordnete Frequenzlage die kleinste Abweichung von der gemessenen Frequenzlage hat. Alternativ kann eine Interpolation erfolgen.

Das zur Auswertung herangezogene Frequenzspektrum des Bodenclutter-Signals wird vorzugsweise durch Mittelung über mehrere Messungen erhalten, so dass das Signal-Rauschverhältnis des Bodenclutter-Signals verbessert wird.

Der Schielwinkel der Antenne 16 wird im beschriebenen Beispiel unmittelbar im Antennendiagramm berücksichtigt, indem die Empfangsleistung so über dem Winkel aufgezeichnet ist, dass sich beim Schielwinkel von beispielsweise 3° das Maximum der Empfangsleistung ergibt. Der Dejustagewinkel $\Delta\alpha$ wird somit unter Berücksichtigung des Schielwinkels des Radarsensors 10 in Elevationsrichtung bestimmt.

Während im beschriebenen Beispiel der Radarsensor 10 im justierten Zustand einen Schielwinkel in Richtung nach unten zum Boden von beispielsweise 3° aufweist, kann alternativ auch eine Antenne 16 ohne einen Schielwinkel verwendet werden, sofern bei horizontal ausgerichteter Antenne ausreichend Leistung von den Bodenreflektionen empfangen werden kann.

Das beschriebene Verfahren hat insbesondere den Vorteil, dass die Auswertung direkt im Frequenzspektrum des empfangenen Radarsignals erfolgt und somit unabhängig von Objekteigenschaften spezieller Radarobjekte und bei der Objekterfassung getroffenen Annahmen über das Objekt ist. Das Bodenclutter-Signal hat außerdem eine hohe Verfügbarkeit und ermöglicht so eine zuverlässigeÜberwachung der Justierung des Sensors.

Alternativ zur unmittelbaren Bestimmung der Frequenzlage des Maximums des Bodenclutter-Signals im gemessenen Frequenzspektrum ist es auch denkbar, zur Bestimmung der Frequenzlage des Maximums eine Funktion, beispielsweise ein Polynom, an das gemessene Frequenzspektrum anzupassen und aus den durch die Anpassung bestimmten Funktionsparametern die Frequenzlage k des Maximums zu bestimmen.

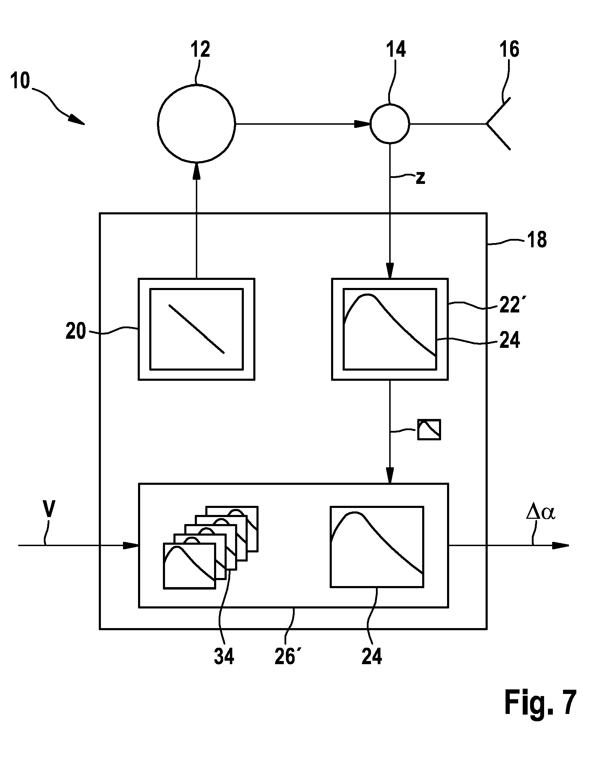

In Fig. 7 ist ein weiteres Beispiel eines Radarsensors 10 gezeigt, bei dem als auszuwertende Charakteristik des empfangenen Bodenclutter-Signals die Form des Frequenzspektrums des Bodenclutter-Signals insgesamt herangezogen wird. Merkmale und Elemente, die dem Beispiel nach Fig. 1 entsprechen, sind mit denselben Bezugszeichen gekennzeichnet.

In diesem Fall vergleicht das Vergleichsmodul 26' das vom Verarbeitungsmodul 22' berechnete Frequenzspektrum 24 des empfangenen Bodenclutter-Signals mit für unterschiedliche Dejustagewinkel berechneten, erwarteten Frequenzspektren 34. Für die jeweiligen Vergleiche kann irgendein geeignetes Abstandsmaß für Funktionen benutzt werden, beispielsweise das Integralüber das Quadrat der Differenz der zu vergleichenden Funktionen. Bei diesem Vergleich wird dasjenige der Vergleichsspektren 34, dessen angenommener Dejustagewinkel am besten dem tatsächlichen Dejustagewinkel entspricht, am besten mit dem gemessenen Spektrum 24 übereinstimmen. Als Dejustagewinkel wird derjenige bestimmt, dessen zugeordnetes Vergleichsspektrum 34 die kleinste Abweichung von dem gemessenen Spektrum hat.

## Patentansprüche

1. Verfahren zur Erkennung einer Dejustage eines Radarsensors (10) eines Fahrzeugs in Elevationsrichtung, **dadurch gekennzeichnet, dass** das Vorhandensein einer Dejustage in Elevationsrichtung erkannt wird auf der Basis einer von der Winkelausrichtung des Radarsensors (10) in Elevationsrichtung abhängigen Charakteristik eines von dem Radarsensor (10) empfangenen Bodenclutter-Signals.

2. Verfahren nach Anspruch 1, umfassend eine Bestimmung eines Dejustagewinkels ($\Delta\alpha$) des Radarsensors (10) in Elevationsrichtung, wobei ein Zahlenwert des Dejustagewinkels ($\Delta\alpha$) bestimmt wird auf der Basis der von der Winkelausrichtung des Radarsensors (10) in Elevationsrichtung abhängigen Charakteristik eines von dem Radarsensor (10) empfangenen Bodenclutter-Signals.

3. Verfahren nach Anspruch 1 oder 2, bei dem als Radarsensor (10) ein FMCW-Radar verwendet wird.

4. Verfahren nach Anspruch 3, bei dem die Charakteristik eine Charakteristik des Frequenzspektrums (24) des von dem Radarsensor (10) empfangenen Bodenclutter-Signals ist.

5. Verfahren nach Anspruch 3 oder 4, bei dem die Charakteristik die Frequenzlage (k) des Maximums im Spektrum (24) des Bodenclutter-Signals für mindestens eine Modulationsrampe umfasst.

6. Verfahren nach einem der vorstehenden Anspüche, bei dem die Charakteristik des von dem Radarsensor (10) empfangenen Bodenclutter-Signals in Bezug gesetzt wird zu einer erwarteten, von der Winkelausrichtung des Radarsensors (10) in Elevationsrichtung abhängigen Charakteristik des Bodenclutter-Signals.

7. Verfahren nach Anspruch 6, bei dem die erwartete Charakteristik vom vertikalen Antennendiagramm des Radarsensors (10) abhängig ist.

8. Verfahren nach Anspruch 5, mit den folgenden Schritten:

   - Berechnen der Frequenzlage (k) des Maximums im Spektrum (24) des gemessenen Bodenclutter-Signals;
   - Vergleichen der berechneten Lage (k) des Maximums mit für unterschiedliche Winkelausrichtungen des Radarsensors (10) anhand eines Eigengeschwindigkeitswertes (V) des Fahrzeugs, einer Einbauhöhe (h) des Radarsensors (10) und eines vertikalen Antennendiagramms des Radarsensors (10) erwarteten Lagen des Maximums.

9. Verfahren nach Anspruch 4, mit dem folgenden Schritt:

   - Vergleichen des Spektrums (24) des gemessenen Bodenclutter-Signals mit für unterschiedliche Winkelausrichtungen des Radarsensors (10) anhand eines Eigengeschwindigkeitswertes (V) des Fahrzeugs, einer Einbauhöhe (h) des Radarsensors (10) und eines vertikalen Antennendiagramms des Radarsensors (10) erwarteten Spektren (34) eines Bodenclutter-Signals.

10. Verfahren nach einem der vorstehenden Ansprüche, bei dem das Vorhandensein einer Dejustage in Elevationsrichtung erkannt wird unter Berücksichtigung eines Schielwinkels des Radarsensors (10) in Elevationsrichtung.

11. Radarsensor für Kraftfahrzeuge, **gekennzeichnet durch** ein Auswerteeinrichtung (22, 26), die zur Ausführung des Verfahrens nach einem der Anspüche 1 bis 10 ausgebildet ist.

**Fig. 1**

**Fig. 2**

**Fig. 3**

**Fig. 4**

Fig. 5

Fig. 6

**Fig. 7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 19937723 C2

- DE 102008054579 A1